# FASCICULE DE BREVET EUROPEEN

(11) **EP 0 523 222 B1**
(45) Date de publication et mention de la délivrance du brevet: **07.01.1998**
(21) Numéro de dépôt: 92905596.0
(22) Date de dépôt: 31.01.1992
(51) Int. Cl.: G09B 19/06, G09B 5/04

(54) **PROCEDE ET APPAREIL POUR L'ENSEIGNEMENT DES LANGUES**
Verfahren und Vorrichtung zum Unterricht in einer Sprache
METHOD AND APPARATUS FOR THE TEACHING OF LANGUAGES

(30) Priorité: 31.01.1991 FR 9101074
(43) Date de publication de la demande: 20.01.1993
(73) Titulaire: TOMATIS INTERNATIONAL, 75013 Paris (FR)
(72) Inventeur: CAVE, Dominique, F-75015 Paris (FR); BONGIORNO, Marc, F-77350 Boisettes (FR)
(74) Mandataire: Michelet, Alain
(86) Numéro de dépôt international: FR9200084
(87) Numéro de publication internationale: WO9214229

(56) Documents cités:
- BE-A- 782 406
- FR-A- 2 495 361
- GB-A- 2 026 817
- US-A- 4 020 567
- PATENT ABSTRACTS OF JAPAN vol. 13, no. 443 (P-941)(3791) 5 Octobre 1989

## Description

La présente invention est relative, d'une manière générale, à l'enseignement des langues, et en particulier des langues étrangères.

On sait depuis fort longtemps que la fourniture vocale d'un sujet, c'est-à-dire les sons qu'il émet, subit une transformation importante en fonction de la fourniture auditive appliquée à ce même sujet, c'est-à-dire de l'information sonore qu'il reçoit.

On conçoit donc aisément que, dans l'enseignement d'une langue étrangère, les progrès seront d'autant plus rapides que le sujet, au lieu de répéter inlassablement la même phrase et de se faire corriger soit par un professeur, soit par une machine, jusqu'à ce que cette phrase soit correctement énoncée, reçoit au moins une fourniture auditive qui provient de sa propre fourniture vocale et qui a été modifiée par traitement pour tenir compte des caractéristiques de la langue en question et du contenu harmonique de la fourniture vocale de ce sujet.

On connaît déjà, notamment dans le domaine particulier ci-dessus de l'enseignement des langues, divers appareils dans lesquels l'émission vocale du sujet est recueillie, traitée et appliquée en retour sous une forme modifiée au sujet par un signal vibratoire, en général sonore.

Ainsi, le demandeur a proposé, dans le document GB-A-2 026 817, de traiter simultanément et en parallèle dans deux canaux différents, par filtration et amplification, un même signal électrique provenant de l'émission vocale du sujet. On applique ensuite au sujet le signal de sortie de l'un ou l'autre canal en fonction de l'amplitude du niveau sonore de l'émission vocale du sujet.

Dans le document BE-A- 782 406, le signal d'entrée est également traité de façon analogue mais, cette fois, on applique au sujet d'abord le signal de sortie de l'un des canaux, au début de l'apprentissage, puis le signal de sortie du second canal après un certain stade d'apprentissage.

Dans le document FR-A- 2 495 361, on crée une corrélation progressive entre le niveau sonore et la fréquence de l'émission vocale du sujet et on applique à ce dernier le signal ainsi traité.

L'invention a pour but de fournir un procédé et un appareil pour l'enseignement des langues qui permettent d'opérer sur la fourniture vocale effective d'origine du sujet les corrections nécessaires provoquées par les modifications de la fourniture auditive et de la langue étudiée.

A cet effet, le procédé selon l'invention est conforme à celui défini dans la revendication 1.

Ainsi, après chacune de ses émissions vocales, le sujet reçoit sélectivement en réponse une première fourniture sonore qui correspond à sa propre émission vocale modifiée en fonction des paramètres prédéterminés de la langue à étudier, et notamment des fréquences de cette langue, ou une seconde fourniture sonore de correction qui correspond à sa propre émission vocale mais modifiée cette fois en fonction du contenu harmonique de cette émission elle-même et des caractéristiques de la langue à étudier.

Le procédé selon l'invention est avantageusement conforme à l'un au moins des modes de mise en oeuvre définis aux revendications 2 et 3.

De préférence, et de façon connue en soi, les deux fournitures sonores sont appliquées au sujet par voie osseuse et par voie aérienne, cette dernière voie étant légèrement en retard par rapport à la première. Pour cela, selon l'invention, le deuxième et le troisième signaux sont appliqués chacun à une première et une seconde bascules qui commandent respectivement, après amplification et retards successifs prédéterminés, pour le passage du deuxième signal au troisième signal, et sans retard pour le retour au deuxième signal, au moins un vibrateur placé sur la peau et/ou au voisinage des os de la tête du sujet et au moins un écouteur placé sur une oreille du sujet.

Pour la mise en oeuvre de ce procédé, l'appareil selon l'invention est tel que défini à la revendication 4.

Des modes préférés de réalisation de l'appareil selon l'invention sont définis aux revendications 5 et 6.

Avantageusement, l'appareil comporte encore une première et une seconde bascules recevant chacune le deuxième et le troisième signaux, au moins un vibrateur placé sur la peau et/ou au voisinage des os de la tête du sujet et commandé par la première bascule ; au moins un écouteur placé sur une oreille du sujet et commandé par la seconde bascule ; et des moyens pour commander sélectivement les deux bascules de manière à appliquer au sujet le deuxième ou le troisième signal à la fois par voie osseuse et par voie aérienne, cette dernière étant en léger retard par rapport à la voie osseuse.

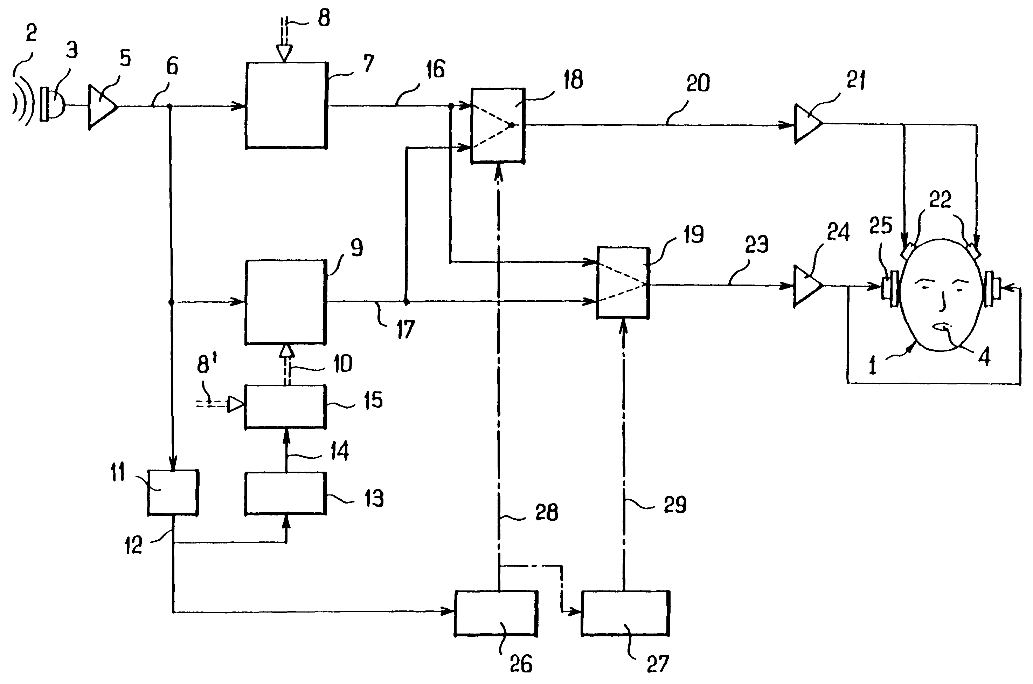

On comprendra bien l'invention à la lecture du complément de description qui va suivre et en référence au dessin annexé qui fait partie de la description et dont la figure unique est un schéma montrant un appareil établi selon un mode de réalisation preféré de l'invention.

On a schématiquement représenté sur la figure un sujet 1 dont l'émission vocale 2 dans la langue qu'on doit lui enseigner est reçue par un microphone 3. Par commodité du dessin, le microphone 3 est représenté à distance du sujet 1 mais, bien entendu, dans la réalité, le microphone 3 est placé au voisinage immédiat de la bouche 4 du sujet 1. Le microphone 3 délivre donc, éventuellement après amplification en 5 permettant d'assurer qu'on n'aura pas de signal de trop faible amplitude, un premier signal 6 qui est représentatif de l'émission sonore effective 2.

Le signal 6 est appliqué à un premier circuit de traitement 7, dit égaliseur multifréquences, qui est réglé de manière prédéterminée, comme schématisé en 8, en fonction de la langue étrangère en question, et plus particulièrement de la bande passante de cette langue et de l'allure de cette bande passante, c'est-à-dire de la courbe enveloppe de cette langue. Dans la pratique, l'égaliseur 7 est en fait constitué par une pluralité de filtres successifs ajustés respectivement sur des fréquences différentes et présentant un faible coefficient de qualité pour que les courbes de gain des filtres en fonction de la fréquence se chevauchent par leurs fronts successifs descendants et ascendants. On obtient ainsi, par l'égaliseur 7 et les paramètres de réglage 8, une courbe enveloppe du gain en fonction de la fréquence, cette courbe enveloppe étant représentative de la langue à étudier. Le premier signal 6 est également appliqué à un second circuit de traitement 9, également dit égaliseur multifréquences, dont les paramètres de réglage, schématisés en 10, sont, non pas prédéterminés mais établis, d'une part, en fonction de la langue à étudier, comme montré en 8' et, d'autre part, en fonction du contenu harmonique de la vibration sonore de l'émission vocale 2. Pour cela, le premier signal 6 est encore appliqué à un circuit de mise en forme 11. Dans la pratique, ce circuit 11 est un circuit dit compresseur-extenseur dont le rôle est d'éviter un défaut d'analyse en aval en raison d'une éventuelle émission vocale 2 trop faible ou trop puissante ; dans l'exemple considéré où on a recours à l'amplificateur 5, comme indiqué ci-dessus, le circuit 11 ne sert en fait, éventuellement, qu'à comprimer les maximas du signal 6 puisqu'on est assuré d'avoir au moins les valeurs minimales grâce à l'amplificateur 5. Le signal de sortie 12 du circuit 11 est appliqué à un circuit d'analyse 13 dont l'amplitude du signal de sortie 14 est fonction de la fréquence instantanée du premier signal 6 mis en forme pour donner le signal 12. Ce circuit 13, dans la pratique, découpe en tranches de fréquences le signal 12 pour leur appliquer respectivement des gains différents. L'amplitude du signal 14 de sortie du circuit 13 est donc fonction, par rapport à l'amplitude du signal d'entrée 12, des fréquences de celui-ci. A son tour, le signal 14 est traité dans un circuit 15 de calcul dont la sortie schématisée en 10 définit les paramètres de réglage du circuit de traitement 9. Ce circuit 15 réalise la différence, pour chaque tranche de fréquences, entre le signal 14 et les paramètres 8' établis, comme les paramètres 8, en fonction de la langue à étudier. Ainsi, alors que l'égaliseur 7 n'est paramétré en fréquence que par les caractéristiques de la langue à étudier, l'égaliseur 9 est paramétré, en 10, par la différence entre un signal traité provenant de la fourniture vocale effective du sujet et les caractéristiques de cette langue.

Ainsi, à partir du premier signal 6 représentatif de l'émission sonore 2 du sujet 1, on crée un deuxième signal 16 qui est modifié par rapport au premier signal de manière prédéterminée en fonction de la bande passante de la langue à apprendre, et notamment de la courbe enveloppe de cette langue, et un troisième signal 17 qui est dérivé du premier signal 6 par modification en fonction du contenu harmonique effectif de l'émission vocale 2 et des caractéristiques de la langue.

Les deux signaux 16 et 17 sont alors, selon leur contenu, sélectivement appliqués au sujet 1 qui reçoit ainsi, en réponse à son émission vocale 2, sélectivement les deux signaux 16 et 17.

De préférence, et de façon connue en soi, chacun des deux signaux 16 et 17 est appliqué au sujet 1 à la fois par voie osseuse et par voie aérienne. Pour cela, l'appareil comporte une première bascule 18 qui reçoit les deux signaux 16 et 17, et une seconde bascule 19 qui reçoit également ces deux signaux. Le signal de sortie 20 de la première bascule 18 commande, éventuellement après amplification en 21, au moins un transducteur 22, et par exemple deux, qui sont placés sur la peau ou la chevelure du sujet 1 au voisinage immédiat des os, tandis que le signal de sortie 23 de la seconde bascule 19 commande, éventuellement après amplification en 24, au moins un écouteur 25, et en général deux, placés sur les oreilles du sujet 1.

La première bascule 18 est commandée par un circuit à retard 26 qui reçoit comme signal d'entrée le signal 12 de sortie du circuit de mise en forme 11. La seconde bascule 19 est commandée par le signal de sortie 29 du circuit 27 dit de précession qui est piloté par le signal de sortie 28 du circuit de retard 26 commandant la bascule 18. Les bascules 18, 19 et les circuits de commande 26, 27 sont agencés pour que les fournitures auditives au sujet 1 correspondant aux signaux traités 16, 17 se fassent suivant les séquences, les alternances et les retards désirés. Dans le présent cas, le circuit 26 fait passer la bascule 18, avec un premier retard prédéterminé, puis la bascule 19, avec un retard supplémentaire prédéterminé par le circuit 27, sur l'entrée du signal 17 lorsqu'il détecte le passage ascendant de l'amplitude du signal 12 par un seuil prédéterminé, la commutation des bascules 18, 19 sur l'entrée du signal 16 se faisant ensuite, sous la commande des circuits 26, 27, et cette fois sans aucun retard, dès que ce seuil est à nouveau franchi par l'amplitude décroissante du signal 12. Ainsi le sujet 1 reçoit en retour le signal 16 tant que sa propre fourniture vocale est correcte, et le signal 17 de correction quand sa fourniture vocale est incorrecte, ce qui, comme indiqué précédemment, favorise l'enseignement de la langue par le contraste créé entre la fourniture vocale et le retour auditif perçu correspondant à cette fourniture vocale.

## Revendications

1. Procédé pour l'enseignement des langues comportant les phases consistant à:
- recueillir l'émission vocale (2) d'un sujet (1) dans une langue à apprendre pour créer un premier signal (6) représentatif de cette émission;
- effectuer un premier traitement du premier signal (6) pour créer un deuxième signal (16) représentatif du premier signal modifié de manière prédéterminée en fonction de la courbe enveloppe de la langue à apprendre, ledit premier traitement (8) étant effectué dans un premier égaliseur multifréquences (7) constitué par une pluralité de filtres ajustés respectivement sur des fréquences différentes,
caractérisé en ce que
- lors du premier traitement, les courbes de gain des filtres en fonction de la fréquence se chevauchent par leur fronts successifs descendant et ascendant, formant ainsi une bande passante du premier égaliseur (7) qui correspond à la courbe enveloppe de la langue à apprendre;
- on effectue un second traitement du premier signal (6) pour créer un troisième signal (17) représentatif du premier signal, modifié en fonction du contenu harmonique de l'émission vocale (2) et des caractéristiques de la langue, ledit deuxième traitement étant effectué par un second égaliseur (9) recevant ses paramètres de réglage au travers de, successivement, un compresseur-extenseur (11) avec le premier signal (6) comme signal d'entrée, un circuit d'analyse (13) et un circuit de calcul (15), de sorte que la bande passante du second égaliseur (9) corresponde à la différence entre la courbe enveloppe d'un signal traité, provenant du sujet, et la courbe enveloppe de la langue à apprendre;
- puis on applique sélectivement au sujet (1), le deuxième ou le troisième signal (16, 17) selon que, respectivement, l'amplitude du premier signal, mis en forme de manière appropriée, est en-deçà, ou au-delà d'un seuil prédéterminé.

2. Procédé selon la revendication 1, caractérisé par le fait que le passage de l'application au sujet (1) du deuxième signal (16) à l'application du troisième signal (17) se fait avec un retard prédéterminé par rapport à l'instant du passage ascendant du premier signal (6) mis en forme par ledit seuil, et que le retour à l'application du deuxième signal se fait sans retard par rapport à l'instant du passage descendant du premier signal (6) mis en forme par ledit seuil.

3. Procédé selon l'une des revendications 1 et 2, caractérisé par le fait que le deuxième et le troisième signal (16, 17) sont appliqués chacun à une première et une seconde bascules (18, 19) qui commandent respectivement et éventuellement après amplification et avec retards successifs prédéterminés pour le passage du deuxième signal au troisième signal, et sans retard pour le retour au deuxième signal, au moins un vibrateur (22) placé sur la peau et/ou au voisinage des os de la tête du sujet (1) et au moins un écouteur (25) placé sur une oreille du sujet.

4. Appareil pour la mise en oeuvre du procédé selon l'une des revendications 1 à 3 comportant:
- un microphone (3) pour recueillir l'émission vocale (2) du sujet (1) dans la langue à apprendre et pour créer le premier signal (6);
- un premier circuit (7) de traitement du premier signal (6) pour créer le deuxième signal (16), modifié par rapport au premier signal en fonction de la courbe enveloppe de la langue à apprendre, ledit premier circuit étant constitué par une pluralité de filtres successifs ajustés respectivement sur des fréquences différentes,
caractérisé en ce que:
- dans le premier circuit les courbes de gain desdits filtres en fonction de la fréquence se chevauchent par leurs fronts successifs descendant et ascendant, formant ainsi une bande passante de l'égaliseur qui correspond à la courbe enveloppe de la langue à apprendre, et en ce que l'appareil comporte aussi:
- un second circuit (11, 13, 15, 9) de traitement du premier signal (6) pour créer le troisième signal (17), modifié par rapport au premier signal en fonction du contenu harmonique de l'émission vocale (2) et du spectre de fréquence de la langue à apprendre, ledit second circuit comportant un circuit (11) de mise en forme du premier signal (6) pour que son amplitude soit située entre deux valeurs prédéterminées;
- un circuit d'analyse (13) découpant en tranches de fréquence le signal (12) de sortie du circuit (11) de mise en forme, pour leur appliquer respectivement des gains différents, l'amplitude du signal (14) de sortie du circuit (13) étant donc fonction, par rapport à l'amplitude du signal d'entrée (12), des fréquences de celui-ci;
- un circuit de calcul (15) dont l'amplitude du signal de sortie est proportionnelle à la différence entre les amplitudes instantanées du signal de sortie du circuit d'analyse (13) et des paramètres de la langue, lesdits paramètres étant le spectre de fréquence et la bande passante, un égaliseur (9) recevant le premier signal (6) pour délivrer le troisième signal (17), les paramètres de réglage de l'égaliseur (9) étant définis par la sortie du circuit de calcul (15), de sorte que la bande passante de l'égaliseur (9) corresponde à la différence entre la courbe enveloppe d'un signal traité, provenant du sujet et la courbe enveloppe de la langue à apprendre;
- et des moyens basculants (18, 19, 26, 27) pour appliquer sélectivement au sujet (1) le deuxième ou le troisième signal (16, 17) selon que, respectivement, l'amplitude du premier signal modifié par le circuit de mise en forme, est en-deçà ou au-delà d'un seuil prédéterminé.

5. Appareil selon la revendication 4, caractérisé par le fait qu'il comporte au moins un circuit à retard (26, 27) tel que le passage de l'application au sujet (1) du deuxième signal (16) à l'application du troisième signal (17) se fait avec un retard prédéterminé par rapport à l'instant du passage ascendant du premier signal (6) mis en forme par ledit seuil, et que le retour à l'application du deuxième signal (6) se fait sans retard par rapport à l'instant du passage descendant du premier signal (6) mis en forme par ledit seuil.

6. Appareil selon l'une des revendications 4 et 5, caractérisé par le fait qu'il comporte une première et une seconde bascules (18, 19) recevant chacune le deuxième et le troisième signal (16, 17); au moins un vibrateur (22) placé sur la peau et/ou au voisinage des os de la tête du sujet et commandé par la première bascule (18); au moins un écouteur (25) placé sur une oreille du sujet et commandé par la seconde bascule (19); et des moyens (26, 27) pour commander sélectivement et alternativement les deux bascules (18, 19) de manière à appliquer au sujet le deuxième ou le troisième signal (16, 17) à la fois par voie osseuse et par voie aérienne, cette dernière étant en léger retard par rapport à la voie osseuse.

## Patentansprüche

1. Verfahren für den Sprachenunterricht, welches Stufen umfaßt, die folgendes beinhalten:
- Aufnehmen der stimmlichen Laute (2) einer Person (1) in einer zu lernenden Sprache, um ein erstes Signal (6) zu erzeugen, das für diesen Laut repräsentativ ist;
- Ausführen einer ersten Verarbeitung des ersten Signals (6), um ein zweites Signal (16) zu erzeugen, das für das erste Signal repräsentativ ist, das in einer vorbestimmten Weise abhängig von der Hüllkurve der zu lernenden Sprache modifiziert ist, wobei die erste Verarbeitung (8) in einem ersten Mehrfrequenzentzerrer (7) durchgeführt wird, der aus einer Mehrzahl von Filtern gebildet ist, die jeweils auf die verschiedenen Frequenzen eingestellt sind,
dadurch gekennzeichnet, daß
- bei der ersten Verarbeitung die Verstärkungskurven der Filter sich abhängig von der Frequenz in ihren aufeinanderfolgenden fallenden und steigenden Flanken überschneiden und somit einen Durchlaßbereich des ersten Entzerrers (7) bilden, welcher der Hüllkurve der zu lernenden Sprache entspricht;
- eine zweite Verarbeitung des ersten Signals (6) durchgeführt wird, um ein drittes Signal (17) zu erzeugen, das für das erste Signal repräsentativ ist, welches abhängig von dem harmonischen Inhalt der stimmlichen Laute (2) und den Eigenschaften der Sprache modifiziert ist, wobei die zweite Verarbeitung von einem zweiten Entzerrer (9) durchgeführt wird, der seine Einstellparameter der Reihe nach von einem Verdichter-Dehner (11) mit dem ersten Signal (6) als Eingangssignal, einer Analyseschaltung (13) und einer Rechenschaltung (15) empfängt, so daß der Durchlaßbereich des zweiten Entzerrers (9) der Differenz zwischen der Hüllkurve eines verarbeiteten Signals, das von der Person stammt, und der Hüllkurve der zu lernenden Sprache entspricht;
- anschließend der Person (1) selektiv das zweite oder dritte Signal (16, 17) zugeleitet wird, je nachdem, ob die Amplitude des ersten Signals, das auf geeignete Weise aufbereitet wurde, diesseits bzw. jenseits einer vorgegebenen Schwelle ist.

2. Verfahren nach Anspruch 1, dadurch gekennzeichnet, daß der Übergang vom Zuleiten des zweiten Signals (16) zum Zuleiten des dritten Signals (17) zu der Person (1) mit einer vorgegebenen Verzögerung in bezug auf den Moment des aufsteigenden Durchgangs des ersten Signals (6), das von der Schwelle aufbereitet wurde, erfolgt und daß die Rückkehr zum Zuleiten des zweiten Signals ohne Verzögerung in bezug auf den Moment des absteigenden Durchgangs des ersten Signals (6), das von der Schwelle aufbereitet wurde, erfolgt.

3. Verfahren nach einem der Ansprüche 1 und 2, dadurch gekennzeichnet, daß sowohl das zweite als auch dritte Signal (16, 17) zu einem ersten und zweiten Auffangspeicher (18, 19) geleitet werden, die jeweils und möglichenfalls nach einer Verstärkung und mit vorgegebenen aufeinanderfolgenden Verzögerungen für den Übergang vom zweiten Signal zum dritten Signal und ohne Verzögerung bei der Rückkehr zum zweiten Signal mindestens einen Vibrator (22), der an der Haut und/oder nahe den Kopfknochen der Person (1) angeordnet ist, und mindestens einen Hörer (25), der an einem Ohr der Person angeordnet ist, steuern.

4. Vorrichtung zur Durchführung des Verfahrens nach einem der Ansprüche 1 bis 3, umfassend:
- ein Mikrophon (3) zum Empfang der stimmlichen Laute (2) einer Person (1) in der zu lernenden Sprache und zum Erzeugen des ersten Signals (6);
- eine erste Schaltung (7) zur Verarbeitung des ersten Signals (6) zur Erzeugung des zweiten Signals (16), das in bezug auf das erste Signal abhängig von der Hüllkurve der zu lernenden Sprache modifiziert ist, wobei die erste Schaltung aus einer Mehrzahl von aufeinanderfolgenden Filtern gebildet ist, die jeweils auf verschiedene Frequenzen eingestellt sind,
dadurch gekennzeichnet, daß
- in der ersten Schaltung die Verstärkungskurven der Filter sich abhängig von der Frequenz in ihren aufeinanderfolgenden fallenden und steigenden Flanken überschneiden und somit einen Durchlaßbereich des Entzerrers bilden, welcher der Hüllkurve der zu lernenden Sprache entspricht, und daß die Vorrichtung ferner umfaßt:
- eine zweite Schaltung (11, 13, 15, 9) zur Verarbeitung des ersten Signals (6) zur Erzeugung des dritten Signals (17), das in bezug auf das erste Signal abhängig von dem harmonischen Inhalt der stimmlichen Laute (2) und dem Frequenzspektrum der zu lernenden Sprache modifiziert ist, wobei die zweite Schaltung (11) eine Schaltung (11) zur Aufbereitung des ersten Signals (6) umfaßt, so daß dessen Amplitude zwischen zwei vorgegebenen Werten liegt;
- eine Analyseschaltung (13), welche das Ausgangssignal (12) der Aufbereitungsschaltung (11) in Frequenzgruppen zerlegt, so daß bei ihnen jeweils verschiedene Verstärkungsfaktoren angelegt werden, wobei die Amplitude des Ausgangssignals (14) der Schaltung (13) somit in bezug auf die Amplitude des Eingangssignals (12) von dessen Frequenzen abhängt;
- eine Rechenschaltung (15), deren Ausgangssignalamplitude proportional zu dem Unterschied zwischen den Momentanamplituden des Ausgangssignals der Analyseschaltung (13) und den Parametern der Sprache ist, welche Parameter das Frequenzspektrum und der Durchlaßbereich sind, wobei ein Entzerrer (9) das erste Signal (6) empfängt, um das dritte Signal (17) auszugeben, wobei die Steuerparameter des Entzerrers (9) durch den Ausgang der Rechenschaltung (15) definiert sind, so daß der Durchlaßbereich des Entzerrers (9) dem Unterschied zwischen der Hüllkurve eines verarbeiteten Signals, das von der Person stammt, und der Hüllkurve der zu lernenden Sprache entspricht;
und Auffangspeichermittel (18, 19, 26, 27), um der Person (1) selektiv das zweite oder dritte Signal (16, 17) zuzuleiten, je nachdem, ob die Amplitude des ersten Signals, das durch die Aufbereitungsschaltung aufbereitet wurde, diesseits bzw. jenseits einer vorgegebenen Schwelle ist.

5. Vorrichtung nach Anspruch 4, dadurch gekennzeichnet, daß sie mindestens eine Verzögerungsschaltung (26, 27) umfaßt, so daß der Übergang vom Zuleiten des zweiten Signals (16) zum Zuleiten des dritten Signals (17) zu der Person (1) mit einer vorgegebenen Verzögerung in bezug auf den Moment des aufsteigenden Durchgangs des ersten Signals (6), das von der Schwelle aufbereitet wurde, erfolgt und daß die Rückkehr zum Zuleiten des zweiten Signals (6) ohne Verzögerung in bezug auf den Moment des absteigenden Durchgangs des ersten Signals (6), das von der Schwelle aufbereitet wurde, erfolgt.

6. Vorrichtung nach einem der Ansprüche 4 und 5, dadurch gekennzeichnet, daß sie einen ersten und einen zweiten Auffangspeicher (18, 19) umfaßt, die jeweils das zweite und das dritte Signal (16, 17) empfangen; mindestens einen Vibrator (22), der an der Haut und/oder nahe den Kopfknochen der Person angeordnet ist und von dem ersten Auffangspeicher (18) gesteuert wird; mindestens einen Hörer (25), der an einem Ohr der Person angeordnet ist und von dem zweiten Auffangspeicher (19) gesteuert wird; und Mittel (26, 27) zur selektiven und alternativen Steuerung der beiden Auffangspeicher (18, 19) in derartiger Weise, daß der Person das zweite oder das dritte Signal (16, 17) gleichzeitig über den Knochenweg und den Luftweg zugeleitet wird, wobei letztgenannter in bezug auf den Knochenweg geringfügig verzögert ist.

## Claims

1. A process of language teaching which includes the steps of
• receiving the statement (2) by a person (1) in a language to be learnt in order to create a first signal (6) containing this statement;
• subjecting this first signal (6) to a first processing in order to create a second signal (16) representative of the first signal modified in a predetermined manner according to the envelope curve of the language being learnt, said first processing (8) being performed in a first multifrequency equalizer (7) constituted by a plurality of filters respectively tuned to different frequencies,
characterized in that:
• during the first processing, the gain curves of the filters according to frequency overlap at their successive descending and ascending fronts, thus forming a pass band of the first equalizer (7) which corresponds to the envelope curve of the language to be learnt;
• the first signal (6) is subjected to a second processing in order to create a third signal (17) representative of the first signal, modified according to the harmonic content of the statement (2) and according to the characteristics of the language, said second processing being performed by a second equalizer (9) which receives its controlling parameters through, successively, a compandor (11) having the first signal (6) as input signal, an analysis circuit (13) and a computing circuit (15), so that the pass band of the second equalizer (9) corresponds to the difference between the envelope curve of a processed signal, coming from said person, and the envelope curve of the language to be learnt;
• then the second or third signal (16, 17) is selectively fed to the person (1) depending on whether the amplitude of the first signal, appropriately adapted, is respectively above or below a predetermined threshold.

2. Process according to claim 1, characterized in that the transition from the second signal (16) to the third signal (17) fed to the person (1) occurs with a predetermined delay whenever the amplitude of the adapted first signal (6) exceeds the predetermined threshold, and resumption of the second signal occurs without delay whenever the amplitude of the adapted first signal (6) drops below the predetermined threshold.

3. Process according to either claim 1 or claim 2, characterized in that the second and third signals (16, 17) are each fed to a first and a second switch (18, 19) which respectively control, possibly after amplification and with successive predetermined delays for the transition from the second signal to the third signal, and without delay for the resumption of the second signal, at least one vibrator (22) placed on the skin and/or in the vicinity of the skull of the person (1), and at least one earphone (25) placed over one ear of the person.

4. An apparatus for operating the process according to any of claims 1 to 3, which includes:
• a microphone (3) for receiving the statement by a person (1) in the language to be learnt and for creating the first signal (6);
• a first processing circuit (7) for the first signal (6) for creating the second signal (16) modified in relation to the first signal according to the envelope curve of the language to be learnt, said first circuit being constituted by a plurality of successive filters, respectively tuned to different frequencies,
characterised in that:
• in the first circuit, the gain curves of said filters according to frequency overlap at their successive descending and ascending fronts, thus forming a pass band of the equalizer which corresponds to the envelope curve of the language to be learnt, and in that the apparatus also comprises:
• a second processing circuit (9, 11, 13, 15) for the first signal (6) for creating a third signal (17), modified in relation to the first signal according to the harmonic content of the statement (2) and according to the frequency spectrum of the language to be learnt, said second circuit comprising a circuit (11) for adapting the first signal (6) so that its amplitude extends between two predetermined values;
• an analysis circuit (13) dividing the output signal (12) from the adaptation circuit (11) into frequency ranges, to apply different gains to them, respectively, the amplitude of the output signal (14) from the circuit (13) being thus a function, with respect of the amplitude of the input signal (12), of the frequencies of said signal (12);
• a computing circuit (15) whose amplitude of the output signal is proportional to the difference between the instantaneous amplitudes of the output signal from the analysis circuit (13) and the parameters of the language, said parameters being the frequency spectrum and the pass band, an equalizer (9) receiving the first signal (6) in order to create the third signal (17), the controlling parameters of the equalizer (9) being defined by the output of the computing circuit (15), so that the pass band of the equalizer (9) corresponds to the difference between the envelope curve of a processed signal, providing from the person, and the envelope curve of the language to be learnt;
• and switching means (18, 19, 26, 27) for selectively feeding the second or the third signal (16, 17) to the person (1) depending on whether the amplitude of the first signal modified by the adapting circuit is above or below a predetermined threshold, respectively.

5. An apparatus according to claim 4, characterized in that it includes at least one delay circuit (26, 27) whereby in use a transition from the second signal (16) to the third signal (17) being fed to the person (1) occurs with a predetermined delay whenever the amplitude of the adapted first signal (6) exceeds the predetermined threshold, and resumption of the second signal occurs without delay whenever the amplitude of the adapted first signal (6) drops below the predetermined threshold.

6. An apparatus according to either claim 4 or 5, characterized in that it includes a first and a second switch (18, 19) receiving each the second and third signals (16, 17); at least one vibrator (22) placed on the skin and/or in the vicinity of the skull of the person (1) and controlled by the first switch (18); at least one earphone (25) placed over one of the person's ears and controlled by the second switch (19); and means (26, 27) for selectively and alternately operating the two switches (18, 19) in such a manner as to feed the second or the third signal (16, 17) to the person (1) at the same time by the person's bone structure and by airwaves, the latter route being slightly slower than the former.
